(19) Europäisches Patentamt

European Patent Office

Office européen des brevets

(11) Veröffentlichungsnummer: **0 012 325**
**B1**

(12) **EUROPÄISCHE PATENTSCHRIFT**

(45) Veröffentlichungstag der Patentschrift:
31.08.83

(21) Anmeldenummer: 79104881.2

(22) Anmeldetag: 04.12.79

(51) Int. Cl.³: **G 01 P 1/00**, G 01 R 33/12,
G 01 B 7/00 // G11B5/30

(54) **Magnetoresistiver Wandler.**

(30) Priorität: 15.12.78 US 970070

(43) Veröffentlichungstag der Anmeldung:
25.06.80 Patentblatt 80/13

(45) Bekanntmachung des Hinweises auf die Patenterteilung:
31.08.83 Patentblatt 83/35

(84) Benannte Vertragsstaaten:
DE FR GB

(56) Entgegenhaltungen:
DE-A-2 238 525
DE-A-2 418 917
DE-A-2 705 439
US-A-4 039 936
SIEMENS-ZEITSCHRIFT, Sonderdruck Band 45, Nr. 9 und 10, September und Oktober 1971 Berlin und München H.-G. STEIDLE «Magnetisch steuerbare Halbleiterwiderstände» Seiten 1 bis 11

(73) Patentinhaber: **International Business Machines Corporation, Old Orchard Road, Armonk, N.Y. 10504 (US)**

(72) Erfinder: **Wilson III, Joseph Townsend, 37 Pembroke Drive, Endicott, New York 13760 (US)**

(74) Vertreter: **Kirchhof, Norbert, Ing. grad., Schönaicher Strasse 220, D-7030 Böblingen (DE)**

Magnetoresistiver Wandler

Die Erfindung bezieht sich auf einen magnetoresistiven Wandler der im Oberbegriff des Anspruchs 1 genannten Art. Ein solcher Wandler ist aus der US-A 4039936 bekannt.

Die üblichen Anordnungen derartiger Wandler sind besonders gut geeignet für die Erzeugung einer Serie von Signalen, die das Fortschreiten entlang eines gezahnten oder geschlitzten Gliedes darstellen und sind wirksam, entweder in der Vorwärts- oder Rückwärtsrichtung. Bei typischen Verschiebungsabfühlvorrichtungen verändert sich der Spalt zwischen den Magnetwiderständen und dem relativ hierzu bewegten magnetischen Glied, wodurch bedeutsame Veränderungen der Ausgangssignalamplitude auftreten. Die Verwendung von Elementen in Paaren mit einem Mittelabgriff erhöht die Signalamplitude und kompensiert die Temperaturabweichung. Die Anordnung eignet sich auch für eine Verbindung mit einer Brückenschaltung. Ferner ermöglicht die Anordnung die Lageabfühlung während eines Stillstandes und ergibt Signale mit einem schnellen Anstieg, auf welche Pegeldetektoren besser ansprechen. Weitere Beispiele bekannter Anordnungen sind in den US-Patentschriften 3846697, 4012728 und 4079360 beschrieben. Eine Beschreibung magnetoresistiver Vorrichtungen ist ferner enthalten in «Galvanometrischen Vorrichtungen» B 1645.101, 1976/77 der Siemens AG, München.

Die bekannten Anordnungen weisen jedoch einen Mangel auf, wenn sie für die genaue Anzeige einer besonderen Lage beispielsweise einer Ausgangsstellung, verwendet werden. Beim Wechsel der Richtung der Relativbewegung wechselt nämlich auch die Polarität des Signales, da die positive oder negative Polarität des Signales dadurch bestimmt wird, dass beide Magnetwiderstände dem gleichen magnetischen Fluss ausgesetzt sind. Dieser Polaritätswechsel des Signales macht Ergänzungsschaltungen notwendig, um das gewünschte Signal auszuwählen. Diese Schaltungen erzeugen für einen durch die Zähne oder Schlitze des genannten Gliedes bestimmten Bereich kein Ausgangssignal, das den Mittelabgriff Pegel zweimal kreuzt.

Die Erfindung, wie sie in den Ansprüchen gekennzeichnet ist, löst die Aufgabe, die mit einem magnetoresistiven Wandler erzielbare Genauigkeit der Lagebestimmung eines relativ zum Wandler bewegten Teiles zu erhöhen und unabhängig von der Richtung der Relativbewegung zu machen.

Die durch die Erfindung erreichten Vorteile sind im wesentlichen darin zu sehen, dass nicht nur ein Spitzensignal an einer gewünschten, genau bestimmten Stelle des Bewegungsweges erzeugt wird, sondern darüber hinaus entgegengesetzt verlaufende Signale unmittelbar neben dem Spitzensignal erzeugt werden, wodurch der Anstieg hervorgehoben wird. Dies verbessert die Feststellbarkeit des Spitzensignales und ergibt identische Signalpolaritätswechsel beim Erreichen der das Spitzensignal ergebenden Stelle von beiden Richtungen aus. Die magnetoresistive Anordnung ist abänderbar für unterschiedliche Ausführungen, welche die Grösse des sich ergebenden Ausgangssignales beeinflussen. Die verschiedenen Ausführungen führen zu Herstellungs- und Montageverfahren, die für derartige Wandler gewöhnlich verwendet werden.

Es ist zwar durch die US-A 4079360 bekannt, mit einem magnetoresistiven Wandler ein Ausgangssignal mit einer Spitze und mit zu beiden Seiten derselben angeordneten Kurventeilen entgegengesetzter Polarität zu erzeugen, jedoch weist der Wandler im Gegensatz zur Erfindung zwei magnetoresistive Leiterbahnen auf, deren Mäanderformen rechtwinklig zueinander verlaufen.

Im folgenden wird die Erfindung anhand von in den Figuren veranschaulichten Ausführungsbeispielen beschrieben.

Es zeigen:

Fig. 1 ein Schema einer Vorrichtung zur Abfühlung einer Verschiebung mit einem magnetoresistiven Wandler gemäss der Erfindung,

Fig. 2 eine Draufsicht auf den magnetoresistiven Wandler von Fig. 1,

Fig. 3 die Wellenform eines Ausgangssignales am Mittelabgriff des Wandlers von Fig. 2,

Fign. 4a und 4b Schaltungen für den Wandler nach Fig. 2 und

Fig. 5a, 5b und 6a, 6b weitere Ausführungsformen des magnetoresistiven Wandlers und deren Ausgangswellenformen.

Der magnetoresistive Wandler 10 besitzt ein Paar mäanderförmig ausgebildeter Leiterwege, wobei einer derselben die Verbindungsstreifen 11 und 12 und der andere die Verbindungsstreifen 13 und 14 enthält. Die Wege sind an einem Ende mit dem Mittelabgriff 15 und mit ihren anderen Enden mit Klemmen 16 und 17 für eine nicht gezeigte Spannungsquelle verbunden. Die Wege liegen in einer gemeinsamen Ebene auf dem Substrat 18 und sind zur gemeinsamen Mittellinie 19 symmetrisch angeordnet. Die Verbindungsstreifen 11 bis 14 bestehen aus einem gegenüber einem magnetischen Feld empfindlichen Material, wie einer Verbindung aus Indiumantimonid und Nickelantimonid, deren Widerstand zunimmt bei einer Zunahme der Flussdichte.

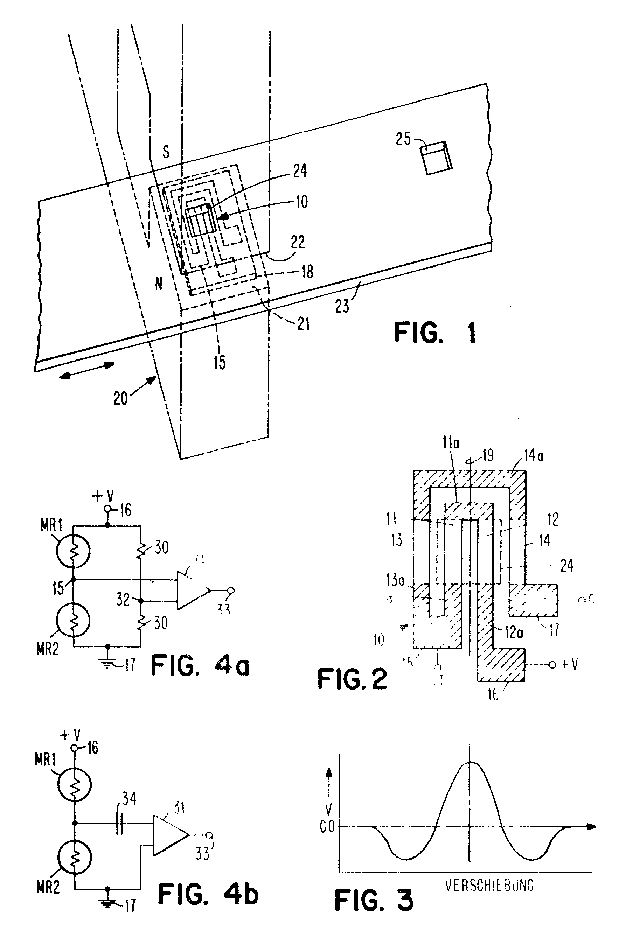

Das Substrat 18 (Fig. 1) ist auf der Polfläche 21 des C-förmigen Magneten 20 befestigt. Zwischen der Polfläche 21 und der gegenüberliegenden Polfläche 22 ist ein magnetisch permeables Codierglied 23, das ein paar Ausschnitte 24, 25 aufweist, angeordnet. Zwischen dem genannten Glied 23 und dem C-förmigen Magnet 20 findet eine Relativbewegung statt. Die Ausschnitte liegen an besonderen Stellen des Codiergliedes 23, die während der Bewegung des Codiergliedes 23 festzustellen sind. Das Codierglied 23 ist an einem hin und her bewegten Maschinenteil befestigt.

Die auf einen magnetischen Fluss ansprechenden Verbindungsstreifen 11 und 12 (Fig. 2) bilden einen Leiterweg im Wandler 10 und sind durch Leiter 11a und 12a mit dem Mittelabgriff 15 und der Spannungsklemme 16 verbunden, während die auf einen magnetischen Fluss ansprechenden Verbindungsstreifen 13 und 14 mit entsprechenden Leitern 13a und 14a verbunden sind, um einen durchgehenden Weg vom Mittelabgriff 15 zur Klemme 17 zu bliden.

Die Leiter 11a bis 14a und der Mittelabgriff 15 und die Klemmen 16, 17 bestehen aus einem magnetoresistiven Material, das abgewandelt ist, um einen relativ niedrigen Widerstand zu besitzen im Vergleich zu den auf magnetischen Fluss ansprechenden Verbindungsstreifen 11 bis 14. Dies ist angezeigt durch die Schraffur in der Zeichnung und wird erzielt durch Überziehen des auf magnetischen Fluss ansprechenden Materials mit einem metallischen Leiter, wie Indium, um diesen Teil des magnetoresistiven Wandlers unempfindlich auf magnetischen Fluss zu machen. Die flussempfindlichen Verbindungsstreifen sind vorzugsweise auf den Bereich beschränkt, an dem die Ausschnitte 24 oder 25 des Codiergliedes 23 vorbeilaufen (in Fig. 2 durch den gestrichelten Ausschnitt 24 dargestellt). Diese Begrenzung wird verwendet, um die Wandlerausgangssignals-Veränderung zu maximieren, wenn der Ausschnitt die Wandlerelemente überquert.

In Fig. 3 ist die Ausgangsspannungsveränderung am Mittelabgriff 15 während der Bewegung des Codiergliedes 23 mit seinem Ausschnitt 24 gegenüber dem Wandler 10 dargestellt. In der in den Fign. 1 und 2 gezeigten Stellung liegen die Verbindungsstreifen 11 und 12 vollständig innerhalb des Ausschnittes 24, so dass für diese beiden Verbindungsstreifen das magnetische Feld ein Minimum darstellt. Somit ist ihr Widerstand am niedrigsten. Die Verbindungsstreifen 13 und 14 liegen in einem Feld eines relativ dichten Flusses und besitzen einen erhöhten Widerstand. Da das Codierglied 23 in beiden Richtungen von der gezeigten Stellung aus sich bewegt, wird entweder der Verbindungsstreifen 11 oder der Verbindungsstreifen 12 beginnen, sich in die Region der höheren Flussdichte zu bewegen und dementsprechend werden sich die Verbindungsstreifen 13 oder 14 in eine Region niederer Flussdichte am Ausschnitt bewegen. Somit wird die Ausgangsspannung am Mittelabgriff 15 ihre Spitze, wie in Fig. 3 gezeigt, bilden. Der negative Ausschlag am Kreuzungspegel C.O ergibt eine schnellere Anstiegszeit, so dass eine Pegelfeststellvorrichtung auf den gewünschten Punkt besser anspricht. Der Ansprechpegel kann natürlich verändert werden, wenn es erwünscht ist, die Ausgangssignaldauer zu begrenzen, welche die Zeit darstellt, während der der Ausschnitt 24 im Codierglied 23 als vorhanden identifiziert wird.

Eine Schaltung, in welcher der Wandler 10 verwendet ist, ist in Fig. 4a gezeigt. MR1 enthält die flussempfindlichen Verbindungsstreifen 11 und 12, während MR2 die flussempfindlichen Verbindungsstreifen13 und 14 enthält. MR1 und MR2 sind über eine Brückenschaltung mit einem Paar gleicher Widerstände 30 verbunden, wobei die Brückenschaltung zwischen die Potentialquelle an der Klemme 16 und die Erde 17 geschaltet ist. Der Mittelabgriff 15 ist mit einem Eingang des Differenzverstärkers 31 verbunden, während der zwischen den Widerständen 30 angeordnete Mittelabgriff 32 als zweiter Eingang des Differenzverstärkers dient. Ein Ausgangssignal ist an der Klemme 33 erhaltbar. Dieses Ausgangssignal kann einem Pegeldetektor zugeführt werden, der seinerseits eine Rechteckwellendarstellung der Ausschnitte 24 oder 25 liefert. Wenn die statische Anzeige des Codiergliedes 23 nicht notwendig ist, kann auf die Brückenschaltung verzichtet werden und der Mittelabgriff 15 kann über den Kondensator 34 (Fig. 4b) mit dem Differenzverstärker 34 verbunden werden.

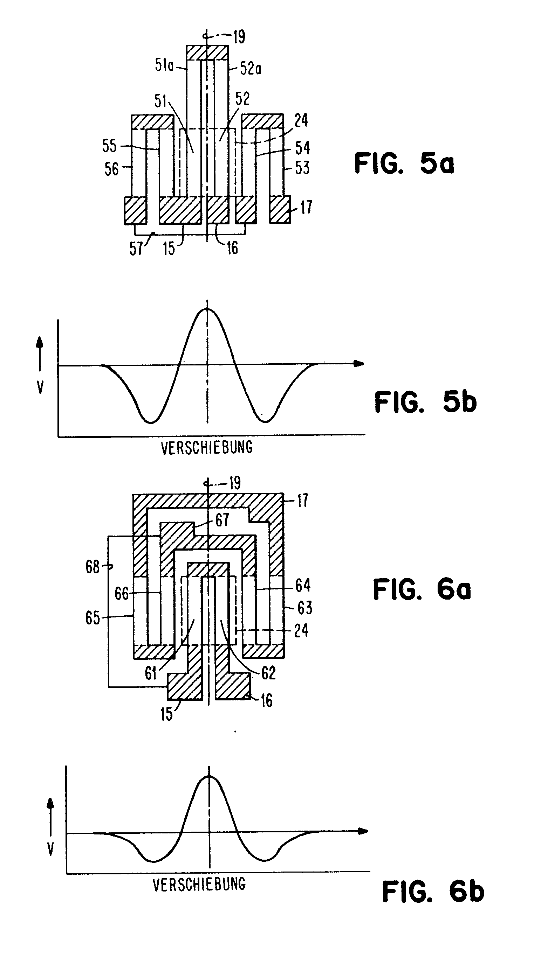

Ein anderes Ausführungsbeispiel eines magnetoresistiven Wandlers ist in Fig. 5a dargestellt. Bei dieser Anordnung bilden magnetisch empfindliche Elemente 51, 52 einen ersten Leiterweg zwischen dem Mittelabgriff 15 und der Klemme 16, während die magnetisch empfindlichen Elemente 53 bis 56 einen zweiten Leiterweg zwischen der Klemme 17 und dem Mittelabgriff 15 bilden. Die aktiven Bindeglieder des flussempfindlichen Materiales haben die gleiche Länge in beiden Wegen und sind durch hoch leitfähige, flussunempfindliche Teile miteinander verbunden, die schraffiert dargestellt sind. Es ist zu betonen, dass die Spitzenteile 51a und 52a in einem relativ konstanten Flussfeld verbleiben, da sie niemals den Ausschnitten 24 oder 25 ausgesetzt sind. Die Elemente 54 und 56 sind durch die Kurzschlussbrücke 57 miteinander verbunden. Die beiden Wege sind symmetrisch zur Mittellinie 19 angeordnet. Das Ausgangssignal am Mittelabgriff 15 ist in Fig. 5b dargestellt, wenn der Ausschnitt 24 im Codierglied 23 den Wandler passiert. Diese Anordnung erzeugt grössere negative Ausschläge relativ zum Spitzenausgangssignal an der gezeigten zentrierten Stellung.

Eine andere Ausführungsform eines magnetoresistiven Wandlers ist in Fig. 6a dargestellt, in welcher ein Weg durch die in Reihe geschalteten Elemente 61 und 62 gebildet wird. Den zweiten Wandlerweg bilden die aktiven Elemente 63 und 64, parallel mit den Elementen 65 und 66. Von den zuletzt genannten vier Elementen enthält einer der alternativen Mäander von der Klemme 17 zur Klemme 67 die Elemente 63 und 64, wobei die Klemme 67 mit dem Mittelabgriff 15 über die Kurzschlussbrücke 68 verbunden ist. Der zweite alternative Mäander führt von der Klemme 17 über die Elemente 65 und 66 wieder zur Klemme 67. Die zwei alternativen Mäander von der Klemme 17 liefern ein Widerstandsgleichgewicht und erzeugen ein Ausgangssignal (Fig. 6b) aufgrund der Verschiebung des Ausschnittes 24 in beiden Richtungen von der Mittellinie 19 ausgehend. Eine Schraffur zeigt wiederum die flussunempfindlichen Wege.

Während die aktiven Elemente als parallel geschaltete Streifen eines magnetisch flussempfindlichen Materials gezeigt wurden, sind auch andere Formen, wie eine Zickzack-Form oder eine unterschiedliche Anzahl von Streifen verwendbar, um die widerstandsempfindlichen Teile des Wandlers zu bilden. Ausserdem kann die Streifenweite variiert werden, um den gewünschten Widerstand zu bewirken. In jeder der Ausführungsformen erzeugt die Anordnung der magnetoresistiven Elemente eine Ausgangsimpulsspitze, die immer von gleicher Polarität ist und an der gleichen Stelle unabhängig von der Richtung des Bewegungsvorganges, wobei die Ausgangswellenform den hocherwünschten schnellen Anstieg an diesem Punkt liefert, um die Genauigkeit der Ortung zu verbessern. Es ist zu bemerken, dass eine kontinuierliche Serie von gleichen Öffnungen in dem magnetisch leitfähigen Material des Codiergliedes angeordnet werden kann, um ein kontinuierlich variierendes Signal zu erzeugen.

Obwohl die magnetische Flussquelle als C-förmiger Magnet dargestellt ist, sind auch andere Formen verwendbar. Der Wandler kann auch der anderen Seite des permeablen Gliedes gegenüberliegend vom Magneten getragen werden, wenn das Flussfeld ausreicht. Die aktiven Bereiche des Wandlers können zwecks Anpassung an Randflüsse oder eigentümliche Feldausgestaltungen variiert werden.

**Patentansprüche**

1. Magnetoresistiver Wandler zur Bestimmung der Lage eines relativ zum Wandler bewegten Teils (23), welches in Richtung der Relativbewegung alternierend aufeinanderfolgende erste und zweite Bereiche (24, 25) unterschiedlicher Permeabilität und jeweils vorgegebener Grösse aufweist, mit einem Magneten (20), dessen Feld das Teil (23) während der Relativbewegung durchsetzt, einem im Feld des Magneten (20) angeordneten Wandlerelement bestehend aus einem vom Magneten getragenen Substrat (18) sowie einer Serienschaltung aus zwei auf dem Substrat angeordneten, jeweils aus mehreren streifenförmigen magnetoresistiven Leiterbahnen (11–14; 51–56; 61–66) gebildeten Widerständen (MR1, MR2), deren miteinander verbundene Enden einen Mittelabgriff (15) und deren jeweils andere Enden Anschlussklemmen (16, 17) für eine Versorgungsspannung (+V, G) bilden, dadurch gekennzeichnet, dass die den einen Widerstand (MR1) bildenden streifenförmigen Leiterbahnen (11, 12; 51, 52; 61, 62) symmetrisch bezüglich einer senkrecht zur Richtung der Relativbewegung verlaufenden Mittellinie (19) des Wandlerelements (10) angeordnet sind, die den anderen Widerstand (MR2) bildenden streifenförmigen Leiterbahnen (13, 14; 53–56; 63–66) ebenfalls symmetrisch bezüglich der genannten Mittellinie, und zwar in einem grösseren Abstand zu dieser Linie als die Leiterbahnen des einen Widerstands, angeordnet sind, und die streifenförmigen Leiterbahnen (11–14; 51–56; 61–66) beider Widerstände (MR1, MR2) weiterhin so angeordnet und ausgerichtet sind, dass im Verlauf der Relativbewegung zwischen dem Teil (23) und dem Wandlerelement zu bestimmten Zeitpunkten der magnetische Fluss durch die Leiterbahnen (11, 12; 51, 52; 61, 62) des einen Widerstands (MR1) von der Permeabilität der ersten Bereiche des Teils (23) und der magnetische Fluss durch die Leiterbahnen (13, 14; 53–56; 63–66) des anderen Widerstands (MR2) durch die Permeabilität der zweiten Bereiche (24, 25) des Teils (23) bestimmt ist.

2. Magnetoresistiver Wandler nach Anspruch 1, dadurch gekennzeichnet, dass alle Leiterbahnen parallel zueinander verlaufen.

3. Magnetoresistiver Wandler nach Anspruch 2, dadurch gekennzeichnet, dass jeder Widerstand (MR1, MR2) zwei Leiterbahnen umfasst, und dass die einzelnen Leiterbahnen der beiden Widerstände mit Hilfe von streifenförmigen Verbindungsleitern (11a, 13a, 14a) zu einem Mäander zusammengesetzt sind.

4. Magnetoresistiver Wandler nach Anspruch 2, dadurch gekennzeichnet, dass der eine Widerstand (MR1) zwei Leiterbahnen (51, 52) und der andere Widerstand (MR2) vier Leiterbahnen (53–56) aufweist, dass der eine Widerstand (MR1) mit Hilfe eines streifenförmigen Verbindungsleiters als ein erster Mäander ausgebildet ist, und dass der zweite Widerstand (MR2) mit Hilfe von streifenförmigen Verbindungsleitern zwei Teilmäander bildet, die jeweils auf gegenüberliegenden Seiten des ersten Mäanders liegen.

5. Magnetoresistiver Wandler nach Anspruch 4, dadurch gekennzeichnet, dass die beiden Teilmäander elektrisch entweder in Serie oder parallel geschaltet sind.

6. Magnetoresistiver Wandler nach einem der Ansprüche 1 bis 3, dadurch gekennzeichnet, dass die Gesamtlänge der Leiterbahnen eines jeden Widerstandes gleich ist.

7. Magnetoresistiver Wandler nach einem der vorhergehenden Ansprüche, dadurch gekennzeichnet, dass das Teil (23) aus einem Materialstreifen besteht, in dem Öffnungen (24, 25) in vorgegebenem Abstand zueinander angebracht sind, und dass das Substrat (18) parallel zur Bewegungsebene des Materialstreifens ausgerichtet ist.

**Claims**

1. Magnetoresistive transducer for determining the position of a part (23) moved relative to the transducer, which part comprises first and second regions (24, 25) which alternate in the direction of the relative movement, which are of different permeability, and which are of a predetermined respective value, with a magnet (20), whose field permeates the part (23) during the relative movement, a transducer element arranged in the field of the magnet (20) and consisting of a substrate (18) supported by the magnet, and of a series arrangement of two resistors (MR1, MR2) arranged on the substrate and respectively formed of several strip-shaped magnetoresistive conductive paths (11–14; 51–56; 61–66), the interconnected ends of said resistors forming a centre tap (15), and the respective other ends forming terminals (16, 17) for a supply voltage (+V, G), characterized in that the strip-shaped conductive paths (11, 12; 51, 52; 61, 62) forming a resistor (MR1) are arranged symmetrically relative to a centre line (19) of the transducer element (10) extending perpendicularly to the direction of the relative movement, that the conductive paths (13,14; 53–56; 63–66) forming the other resistor (MR2) are also arranged symmetrically relative to the abovementioned centre line, at a greater distance from that line than the conductive paths of the one resistor, and that the strip-shaped conductive paths (11–14; 51–56; 61–66) of both resistors (MR1, MR2) continue to be arranged and aligned in such a manner that in the course of the relative movement between the part (23) and the transducer element, at predetermined times, the magnetic flux through the conductive paths (11, 12; 51, 52; 61, 62) of the one resistor (MR1) is determined by the permeability of the first regions of the part (23), and the magnetic flux through the conductive paths (13, 14; 53–56; 63–66) of the other resistor (MR2) is determined by the permeability of the second regions (24, 25) of the part (23).

2. Magnetoresistive transducer as claimed in claim 1, characterized in that all conductive paths extend in parallel to each other.

3. Magnetoresistive transducer as claimed in claim 2, characterized in that each resistor (MR1, MR2) comprises two conductive paths, and that the individual conductive paths of the two resistors are composed by means of strip-shaped connectors (11a, 13a, 14a) to form meander.

4. Magnetoresistive transducers as claimed in claim 2, characterized in that the one resistor (MR1) comprises two conductive paths (51, 52), and the other resistor (MR2) four conductive paths (53-56), that the one resistor (MR1) is designed as a first meander by means of a strip-shaped connector, and that the second resistor (MR2) forms two part meanders by means of strip-shaped connectors, said part meanders being provided each on opposite sides of the first meander.

5. Magnetoresistive transducer as claimed in claim 4, characterized in that the two part meanders are switched either in series or in parallel.

6. Magnetoresistive transducer as claimed in any one of claims 1 to 3, characterized in that the overall length of the conductive paths of each resistor are equal.

7. Magnetoresistive transducer as claimed in any one of the preceding claims, characterized in that the part (23) consists of a material strip having openings with predetermined spacing (24, 25), and that the substrate (18) is arranged in parallel to the plane of movement of the material strip.

### Revendications

1. Transducteur magnéto-résistif permettant de déterminer la position d'une partie (23) animée d'un mouvement par rapport audit transducteur, laquelle partie comporte des premières et secondes régions (24, 25) de perméabilités différentes, chacune ayant une valeur prédéterminée, et qui sont disposées de façon alternée les unes après les autres dans le sens dudit mouvement relatif, ledit transducteur magnéto-résistif comportant un aimant (20) dont le champ traverse ladite partie (23) pendant ledit mouvement relatif, ainsi qu'un transducteur intégré dans le champ de l'aimant (20), comportant d'une part un substrat (18) supporté par ledit aimant, et d'autre part un montage en série de deux résistances (MR1, MR2) implantées sur le substrat, chacune de ces résistances étant constituée de plusieurs chemins conducteurs (11–14; 51–56; 61–66) magnéto-résistifs en forme de bande, dont des extrémités connectées entre elles forment une prise (15) et dont chacune des autres extrémités sont des bornes de connexion (16, 17) qui reçoivent la tension d'alimentation (+V, G), caractérisé en ce que lesdits chemins conducteurs (11, 12; 51, 52; 61, 62) en forme de bande qui constituent une résistance (MR1) sont disposés symétriquement par rapport à une ligne centrale (19) qui s'étend perpendiculairement au sens du mouvement relatif, en ce que lesdits chemins conducteurs (13, 14; 53–56; 63–66) en forme de bande qui constituent la seconde résistance (MR2) sont également disposés symétriquement par rapport à ladite ligne centrale mais où la distance qui sépare ces derniers chemins conducteurs par rapport à ladite ligne centrale est plus grande que celle qui sépare les chemins conducteurs correspondant à la première résistance, en ce que les chemins conducteurs (11-14; 51-56; 61-66) en forme de bande formant les deux résistances (MR1, MR2) sont disposés et alignés de sorte que, au cours du mouvement relatif de ladite partie (23) par rapport audit transducteur, le flux magnétique qui à des moments prédéterminés, traverse lesdits chemins conducteurs (11, 12; 51, 52; 61, 62) de la première résistance (MR1) est déterminé par la perméabilité desdites premières régions de ladite partie (23), et le flux magnétique qui traverse lesdits chemins conducteurs (13, 14; 53-56; 63-66) de la seconde résistance (MR2) est déterminé par la perméabilité desdites secondes régions (24, 25) de ladite partie (23).

2. Transducteur magnéto-résistif selon la revendication 1, caractérisé en ce que tous les chemins conducteurs sont parallèles les uns par rapport aux autres.

3. Transducteur magnéto-résistif selon la revendication 2, caractérisé en ce que chacune des deux résistances (MR1, MR2) comporte deux chemins conducteurs et en ce que les divers chemins conducteurs composant les deux résistances sont assemblés au moyen de connecteurs (11a, 13a, 14a) en forme de bande pour former un méandre.

4. Transducteur magnéto-résistif selon la revendication 2, caractérisé en ce que ladite première résistance (MR1) comporte deux chemins conducteurs (51, 52) et ladite seconde résistance (MR2) quatre chemins conducteurs (53-56), en ce que ladite première résistance (MR1) est constituée au moyen d'un connecteur en forme de bande sous forme d'un premier méandre, et en ce que ladite seconde résistance (MR2) reconstitue au moyen des connecteurs en forme de bande un méandre comportant deux parties, chacune étant disposée sur les côtés opposés dudit premier méandre.

5. Transducteur magnéto-résistif selon la revendication 4, caractérisé en ce que les deux parties de ladite seconde méandre ont un montage électrique soit en parallèle.

6. Transducteur magnéto-résistif selon l'une quelconque des revendications 1 à 3, caractérisé en ce que lesdits chemins conducteurs de chacune des deux résistances ont la même longueur totale.

7. Transducteur magnéto-résistif selon l'une quelconque des revendications précédentes, caractérisé en ce que ladite partie (23) est constituée d'une bande de matériau, dans lequel des ouvertures (24, 25) ont été pratiquées à une distance prédéterminée les unes des autres, et en ce que ledit substrat (18) est parallèle par rapport au plan de mouvement de ladite bande de matériau.

FIG. 1

FIG. 4a

FIG. 2

FIG. 4b

FIG. 3

VERSCHIEBUNG

0012325

FIG. 5a

VERSCHIEBUNG

FIG. 5b

FIG. 6a

VERSCHIEBUNG

FIG. 6b

9